# EUROPÄISCHE PATENTSCHRIFT

(11) **EP 3 326 438 B1**
(45) Veröffentlichungstag und Bekanntmachung des Hinweises auf die Patenterteilung: **18.03.2020**
(21) Anmeldenummer: 18150352.5
(22) Anmeldetag: 31.10.2014
(51) Int. Cl.: A01B 59/00, A01B 71/06, B62D 53/08

(54) **VORDERWAGEN EINES DREHKRANZ-ANHÄNGERS**
FRONT END OF A SWIVEL HEAD TRAILER
WAGON AVANT D'UNE REMORQUE À COURONNE D'ORIENTATION

(30) Priorität: 06.11.2013 DE 202013104971 U
(43) Veröffentlichungstag der Anmeldung: 30.05.2018
(62) Teilanmeldung aus: 14191309.5
(73) Patentinhaber: Terbrack, Norbert, 48691 Vreden (DE)
(72) Erfinder: Terbrack, Norbert, 48691 Vreden (DE)
(74) Vertreter: Habbel, Ludwig

(56) Entgegenhaltungen:
- WO-A1-2008/038313
- DE-A1-102006 059 681
- DE-A1-102007 020 770
- DE-U1-202007 014 589
- DE-U1-202010 000 046
- US-A- 2 888 275
- US-A- 3 428 334
- US-A- 3 764 164
- US-A- 5 060 964
- US-A1- 2003 025 296
- US-A1- 2006 255 559
- US-A1- 2011 074 132

## Beschreibung

Die Erfindung betrifft einen Vorderwagen eines Drehkranz-Anhängers nach dem Oberbegriff des Anspruchs 1.

Aus der DE 20 2010 000 046 U1 ist ein gattungsgemäßer Vorderwagen bekannt.

Als Drehkranz-Anhänger werden im Rahmen des vorliegenden Vorschlags Fahrzeuge bezeichnet, die als Anhänger ausgestaltet sind und als ersten Teil eine Deichsel aufweisen, welche an ein Zugfahrzeug angekuppelt werden kann, sowie eine vordere Achse mit Laufrädern. Der Anhänger weist üblicherweise als zweiten Teil einen Rahmen auf und / oder einen Laderaum zur Aufnahme der Nutzlast, sowie eine vordere hintere Achse mit Laufrädern. Die beiden Teile des Anhängers sind mittels eines um eine aufrechte Achse drehbaren Drehkranzes relativ zueinander schwenkbar verbunden, so dass die vordere Achse eine gelenkte Achse darstellt.

Als Drehschemel wird in der Praxis eine Konstruktion eines Drehkranz-Anhängers bezeichnet, bei welcher die Deichsel auch um eine liegende Achse schwenkbar ist, so dass sie keine Stützkräfte vom Anhänger auf die Kupplung des Zugfahrzeugs überträgt.

Zur Unterscheidung von derartigen Drehschemeln wird im Rahmen des vorliegenden Vorschlags eine Konstruktion eines Drehkranz-Anhängers als Vorderwagen bezeichnet, bei welcher die Deichsel nicht um eine liegende Achse schwenkbar ist, sondern vielmehr als so genannte Starrdeichsel ausgestaltet ist, so dass sie Stützkräfte vom Anhänger auf die Kupplung des Zugfahrzeugs zu übertragen vermag.

Aus der US 3 764 164 A ist ein separates, als Dolly bezeichnetes Fahrzeug bekannt, welches einerseits eine Deichsel und andererseits als Aufnahme für den zweiten Anhängerteil eine Sattelplatte aufweist, und welches insofern mit einem Auflieger gemeinsam einen Anhänger bilden kann, der jederzeit wieder in seine beiden Bestandteile aufgetrennt werden kann und sich insofern von einem Drehkranz-Anhänger unterscheidet. Bei diesem Fahrzeug ist ein Fahrzeugrahmen mit zwei Längsträgern vorgesehen, und die Kippachse der Sattelplatte ist tiefer als die Oberkante der Längsträger angeordnet.

Aus der US 2011/0074132 A1 ist ein Vorderwagen bekannt bei dem statt einer Sattelplatte ein Drehkranz vorgesehen sein kann.

Aus der DE 10 2007 020 770 A1 ist eine Kupplungsvorrichtung zur drehgelenkigen Kopplung von zwei Fahrzeugabschnitten bekannt, wobei diese Kupplungsvorrichtung einen Drehkranz aufweist.

Aus der US 4 065 149 A ist ein Zug bekannt, bestehend aus einem Zugfahrzeug mit einer Sattelplatte und einem als Sattelauflieger ausgestalteten Anhänger. Im Bereich der Sattelplatte ist eine Bremseinrichtung vorgesehen, mit deren Hilfe Schwenkbewegungen des Anhängers um die Hochachse der Sattelplatte begrenzt werden können.

Aus der US 2004 007 170 A1 ist eine Sattelplatten-Anordnung bekannt, bei welcher die Sattelplatte aufgeständert ist und mitsamt ihrem Ständer auf einer Ladefläche, beispielsweise eines als Pick-Up bezeichneten Zugfahrzeugs, montiert werden kann.

Aus der DE 10 2007 040 787 A1 ist eine Sattelkupplung für Kraftfahrzeuge bekannt, die am Bodenteil eines Sattelaufliegers zwei im Abstand befestigbare Königszapfen aufweist, die jeweils in einer Halterung der Sattelkupplungsplatte festlegbar sind.

Der Erfindung liegt die Aufgabe zugrunde, einen gattungsgemäßen Vorderwagen dahingehend zu verbessern, dass die Verlegung von Versorgungsleitungen zu einem zweiten Teil des mithilfe eines solchen Vorderwagens gebildeten Fahrzeug- Anhängers verbessert wird.

Diese Aufgabe wird durch einen Vorderwagen mit den Merkmalen des Anspruchs 1 gelöst. Vorteilhafte Ausgestaltungen sind in den Unteransprüchen beschrieben.

Die Erfindung schlägt mit anderen Worten vor, dass zwei miteinander fluchtende Halbwellen vorgesehen sind, welche diese Kippachse der Aufnahme bilden, die zum Anschluss eines zweiten Teils des Anhängers am vorschlagsgemäßen Vorderwagen vorgesehen ist. Dadurch wird eine besonders vorteilhafte Führung von Versorgungsleitungen durch das Zentrum des Drehkranzes ermöglicht, so dass hierfür eine Durchführungsöffnung vorgesehen ist, durch welche sich diese Versorgungsleitungen erstrecken können. Es kann sich dabei beispielsweise um elektrische Leitungen handeln, die beispielsweise zu Rücklichtern oder sonstigen elektrischen Einrichtungen des zweiten Anhängerteils, der an den vorschlagsgemäßen Vorderwagen angebunden wird, erstrecken. Vorschlagsgemäß ist die Durchführungsöffnung so groß gewählt, dass sie nicht nur vergleichsweise kleine elektrische Versorgungsleitungen aufweist oder Hydraulikleitungen, wie sie für die Bremsen des zweiten Anhängerteils vorgesehen sind, vielmehr ist die Durchführungsöffnung so groß bemessen sein, dass auch vorschlagsgemäß so genannte Vakuumschläuche hindurchgeführt werden können, die zur Entleerung des zweiten Anhängerteils genutzt werden können, wenn dieser als Tank oder Silo ausgestaltet ist. Entsprechend dem vorliegenden Vorschlag erstreckt sich ein solcher Vakuumschlauch durch die Durchführungsöffnung.

Dabei kann vorteilhaft vorgesehen sein, dass die Durchführungsöffnung einen Durchmesser von wenigstens 240 mm aufweist. Insbesondere, wenn wie oben beschrieben die Kippachse durch zwei Halbwellen gebildet ist und die beiden entsprechenden Lagerbuchsen jeweils in die Längsträger des Vorderwagens integriert sind, kann ein sehr großer freier Raum in der Mitte des Drehkranzes geschaffen werden, so dass dort die Durchführungsöffnung beispielsweise bis zu einem Durchmesser von 350 mm geschaffen werden kann. Somit können auch Vakuumschläuche durch den Drehkranz hindurch geführt werden, welche mit einer praxisüblichen Anschlusskupplung versehen sind, die einschließlich der zugehörigen Dichtungen einen Durchmesser von typischerweise 240 mm aufweist.

Vorteilhaft kann der Vorderwagen besonders wirtschaftlich ausgestaltet sein, indem er eine Vakuumpumpe aufweist, die direkt von einer Zapfwelle eines Zugfahrzeuges angetrieben werden kann und dementsprechend einerseits einen solchen Anschluss für eine Zapfwelle aufweist. Andererseits ist diese Vakuumpumpe vorteilhaft direkt an einen Vakuumschlauch angeschlossen, so dass komplizierte zusätzliche Einrichtungen entfallen, die ansonsten zu einer Unterdruckentleerung des zweiten Anhängerteils vorgesehen sein könnten.

Aus der Praxis sind Starrdeichselanhänger bekannt, die eine Hydraulikpumpe mit einem Zapfwellenanschluss aufweisen. Diese Hydraulikpumpe erfordert einen Tank mit Hydraulikflüssigkeit von typischerweise 200 l. Die Hydraulikpumpe treibt ihrerseits über einen Hydraulikmotor eine Vakuumpumpe an, die dann für die Entleerung eines zweiten Anhängers, der mit dem Starrdeichselanhänger verbunden ist, genutzt wird. Insbesondere wenn die oben erwähnte Durchführungsöffnung in ausreichender Größe im Drehkranz vorgesehen ist, kann mittels der vorteilhaft beschriebenen Vakuumpumpe, die unmittelbar von der Zapfwelle des Zugfahrzeuges angetrieben wird, ein Vakuumschlauch durch die Durchführungsöffnung geführt sein, so dass eine problemlose Entleerung des als Tank oder Silo ausgestalteten zweiten Anhängers mit vergleichsweise geringem technischem Aufwand, insbesondere geringem apparativem Aufwand möglich ist.

Vorteilhaft kann vorgesehen sein, die Kippachse tiefer als bislang üblich zu verlegen. Bislang befindet sich die Kippachse eines Drehkranzes oder einer Sattelkupplung oberhalb des Fahrzeugrahmens des Vorderwagens. Wenn Zugkräfte auftreten, nämlich beim Anfahren des Zuges, wenn die träge Masse des mit dem Vorderwagen verbundenen zweiten Teil des Anhängers überwunden werden muss, bewirkt die Position der Kippachse oberhalb der Radachse der Laufräder des Vorderwagens ein Moment, welches an der Anhängekupplung des Vorderwagens nach oben wirkt und somit auf das Zugfahrzeug aushebende Kräfte überträgt, welche die angetriebene Hinterachse des Zugfahrzeuges entlasten und somit die Traktion verschlechtern. Vorteilhaft jedoch ist die Kippachse des Anhängers tiefer als die Oberkante vom Rahmen des Vorderwagens angeordnet, so dass dieses aushebende Moment verringert wird und somit dem Zugfahrzeug eine bessere Traktion ermöglicht wird.

Vorteilhaft kann der Rahmen des Vorderwagens in an sich bekannter Weise zwei nebeneinander verlaufende Längsträger aufweisen. Eine optimal stabile Abstützung der Aufnahme wird dadurch erzielt, dass sich diese Aufnahme möglichst breit an dem Rahmen des Vorderwagens abstützt. Hierzu ist vorgesehen, dass die beiden Halbwellen der Kippachse jeweils an einem der beiden Längsträger gelagert und somit optimal weit auseinander angeordnet sind.

Vorteilhaft kann vorgesehen sein, die Aufnahme zwei Lagerböcke aufweist, wobei jeder Lagerbock zwei Öffnungen zur Führung einer Halbwelle der Kippachse aufweist.

Ein Ausführungsbeispiel der Erfindung wird anhand der rein schematischen Darstellungen nachfolgend näher erläutert. Dabei zeigt
- Fig. 1: eine Seitenansicht auf einen vorschlagsgemäßen Vorderwagen,
- Fig. 2: eine Draufsicht auf den Rahmen von den Vorderwagen der Fig. 1, und
- Fig. 3: den Bereich der als Drehkranz ausgestalteten Aufnahme in einer perspektivischen und teilweise auseinander gezogenen Darstellung schräg von unten.

In den Zeichnungen ist mit 1 insgesamt ein Vorderwagen bezeichnet, der einen Rahmen 2 aufweist, welcher im hinteren Bereich zwei parallele Längsträger 3 aufweist, im vorderen Bereich eine Deichsel 4 aufweist, und wobei im hinteren Bereich eine Laufachse 5 vorgesehen ist mit zwei Laufrädern 6.

Vor der Laufachse 5 ist im hinteren Bereich des Vorderwagens 1, also zwischen den beiden Längsträgern 3, eine Aufnahme 7 vorgesehen, die bei dem dargestellten Ausführungsbeispiel als Drehkranz ausgestaltet ist und zur Aufnahme eines zweiten Anhängerteils dient, welcher mit dem Vorderwagen 1 fest verbunden wird, jedoch mittels des Drehkranzes schwenkbeweglich gegenüber dem Vorderwagen 1 gelagert ist, so dass die Laufachse 5 die gelenkte Vorderachse des gesamten Anhängers bildet.

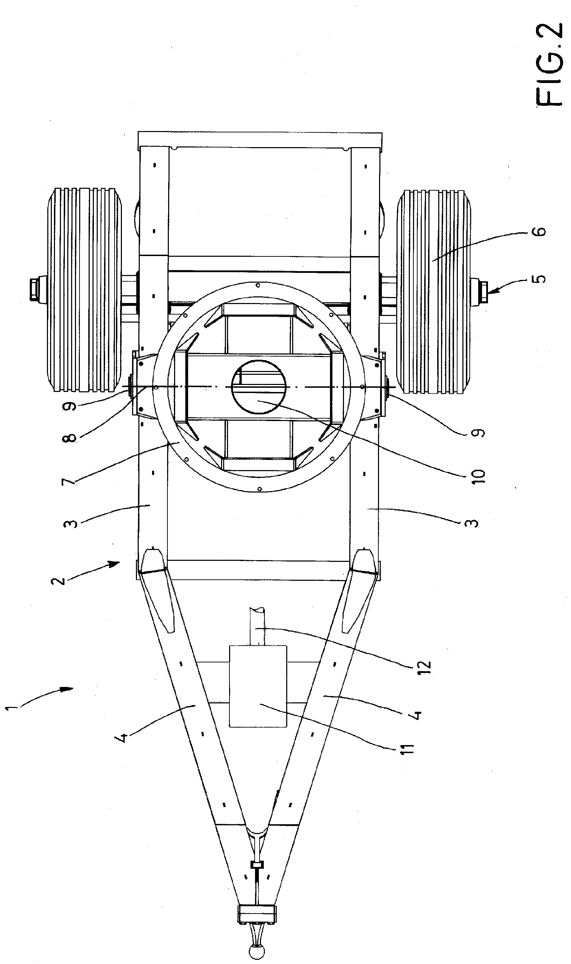

Die Aufnahme 7 ist um eine horizontale Kippachse 8 schwenkbeweglich gelagert, wobei diese Kippachse 8 in Fig. 2 gestrichelt eingezeichnet ist und quer zu den Längsträgern 3 verläuft.

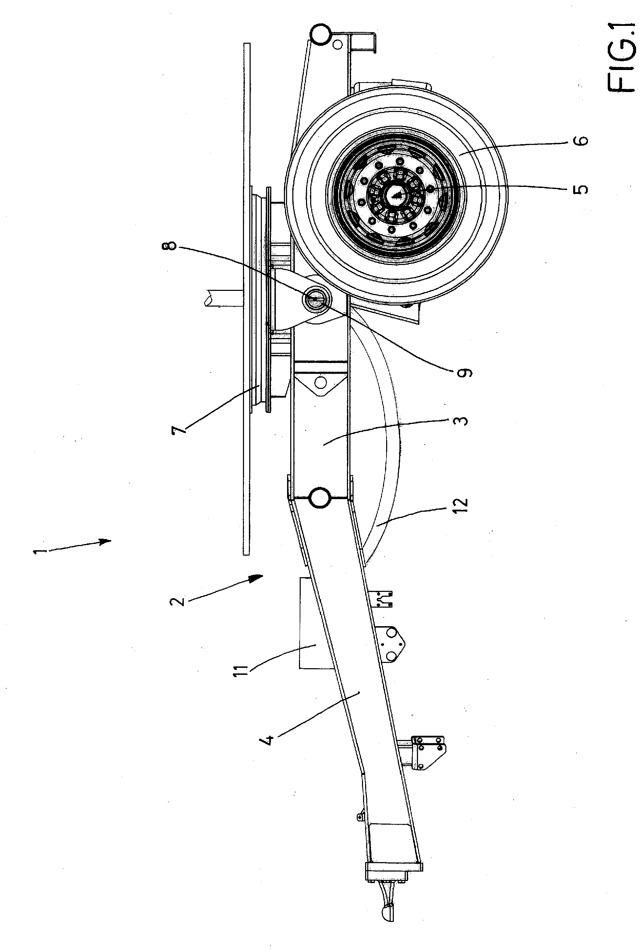

Fig. 1 zeigt, dass die Kippachse 8 unterhalb der Oberkante der Längsträger 3 verläuft und somit tiefer als die Oberkante des Rahmens 2. Aus dieser Verlagerung der Kippachse 8 nach unten im Vergleich zu einem herkömmlichen Vorderwagen ergeben sich bei ansonsten unveränderter Konstruktion des Vorderwagens 1 vergleichsweise geringere nach oben wirkende, aushebende Kräfte am vorderen Kupplungsende der Deichsel 4, wenn bei angehängtem Anhänger Zugkräfte von einem Zugfahrzeug auf den Vorderwagen 1 einwirken.

Gegenüber dem dargestellten Ausführungsbeispiel kann die Kippachse 8 auch noch tiefer abgesenkt sein, so dass dementsprechend die aushebenden Kräfte am Kupplungsende der Deichsel 4 noch weiter verringert werden können.

Bei dem dargestellten Ausführungsbeispiel ist vorgesehen, die Lage der Kippachse 8 durch zwei Halbwellen 9 zu bestimmen, wobei jede dieser beiden Halbwellen 9 an jeweils einem der beiden Längsträger 3 gelagert ist und so innerhalb des Drehkranzes ein großer Freiraum in Form einer Durchführungsöffnung 10 geschaffen werden kann.

Die Durchführungsöffnung 10 weist einen Durchmesser von mehr als 240 mm auf, typischerweise bis zu 350 mm, und ermöglicht auf diese Weise die Durchführung eines Vakuumschlauchs samt dessen Anschlusskupplung und Dichtung. Wenn der Anhänger als Tank- oder Silofahrzeug ausgestaltet werden soll und ein dementsprechend ausgestalteter zweiter Anhängerteil mit dem Vorderwagen 1 verbunden werden soll, kann dementsprechend problemlos auch der zum Entleeren des Anhängers vorgesehene Vakuumschlauch samt seiner Anschlusskupplung und Dichtung durch die Durchführungsöffnung 10 des Starrdeichselanhängers 1 geführt werden, um stets bedarfsgerecht auch diesen Vakuumschlauch anschließen oder - beispielsweise im Falle von Wartungsarbeiten - lösen zu können.

Aus Fig. 1 ist eine schematisch angedeutete Vakuumpumpe 11 ersichtlich, die mit einer Anschlusskupplung für eine Zapfwelle versehen ist, so dass diese Vakuumpumpe 11 unmittelbar von der Zapfwelle eines Zugfahrzeugs angetrieben werden kann. Von der Vakuumpumpe 11 aus erstreckt sich ein schematisch angedeuteter Vakuumschlauch 12 durch die Durchführungsöffnung 10, wobei das obere Ende des Vakuumschlauchs 12 in Fig. 1 nicht dargestellt, sondern der Vakuumschlauch 12 hier unterbrochen bzw. abgebrochen dargestellt ist.

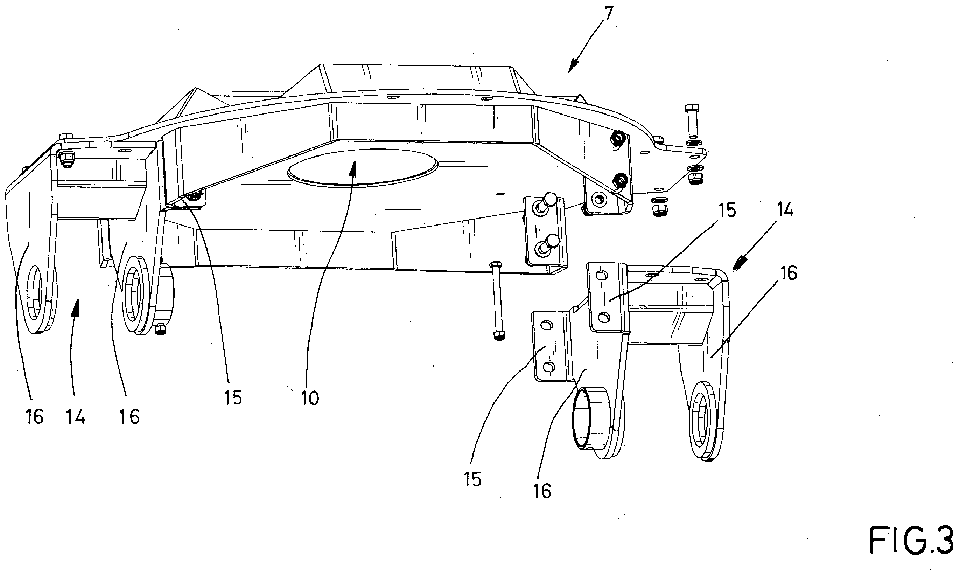

In Fig. 3 ist der Bereich der Aufnahme 7 dargestellt, losgelöst von den übrigen Bauteilen des Vorderwagens 1 bzw. dessen Rahmens 2. Dabei ist die Durchführungsöffnung 10 erkennbar. Weiterhin ist erkennbar, dass die Aufnahme 7 zwei Lagerböcke 14 aufweist, wobei jeder Lagerbock 14 zwei Öffnungen zur Führung einer Halbwelle 9 der Kippachse 8 aufweist. Die Lagerböcke 14 sind mit der Aufnahme 7 verschraubt und weisen zu diesem Zweck Schraublaschen 15 auf.

Die Lagerböcke 14 weisen Dreiecksbleche 16 auf und durch Wahl unterschiedlich hoher Dreiecksbleche 16 kann der Abstand bestimmt werden, in welchem sich die Aufnahme 7 über der Kippachse 8 befindet. Auf diese Weise kann unter Verwendung möglichst vieler gleicher Bauteile eine besonders wirtschaftliche Fertigung des Vorderwagens 1 in Anpassung an unterschiedliche Reifenformate, insbesondere Reifendurchmesser, ermöglicht werden, indem die Aufnahme 7 stets so tief wie möglich gesetzt wird. Bei dieser Anordnung so tief wie möglich wird stets ein aus Sicherheitsgründen vorgesehener Abstand des Anhängerteils, der an den Vorderwagen 1 angeschlossen wird, zu den Laufrädern 6 eingehalten. Dies ist beispielsweise für den Hersteller des Anhängers von Bedeutung, wenn der Anhänger ausschließlich für den Straßenbetrieb vorgesehen ist und dementsprechend gering profilierte Reifen auf den Laufrädern 6 vorgesehen sind. Wird der Anhänger jedoch überwiegend auf dem Feld eingesetzt, so können vorteilhaft entsprechend stark profilierte Reifen an den Laufrädern 6 vorgesehen sein, so dass sich der Durchmesser der Laufräder 6 dementsprechend vergrößert und beispielsweise eine Mulde, ein Silo oder ein Tank entsprechend höher positioniert werden muss.

### Bezugszeichen:

- 1: Vorderwagen
- 2: Rahmen
- 3: Längsträger
- 4: Deichsel
- 5: Laufachse
- 6: Laufrad
- 7: Aufnahme
- 8: Kippachse
- 9: Halbwelle
- 10: Durchführungsöffnung
- 11: Vakuumpumpe
- 12: Vakuumschlauch
- 14: Lagerbock
- 15: Schraublasche
- 16: Dreiecksblech

## Patentansprüche

1. Vorderwagen (1) eines Drehkranz-Anhängers,
mit einem Rahmen (2),
einer mit dem Rahmen (2) verbundenen, Laufräder (6) des Vorderwagens (1) tragenden Laufachse (5),
einer starr mit dem Rahmen (2) verbundenen Deichsel (4), einer als Drehkranz ausgestalteten Aufnahme (7) zum Anschluss eines zweiten Anhängerteils an den Vorderwagen (1),
wobei diese Aufnahme (7) sich am Rahmen (2) des Vorderwagens (1) abstützt,
vor der Laufachse (5) angeordnet ist,
und um eine liegende, quer zur Fahrtrichtung verlaufende Kippachse (8) kippbeweglich gelagert ist,
**dadurch gekennzeichnet,**
**dass** zwei miteinander fluchtende Halbwellen (9) die Kippachse (8) bilden,
und **dass** innerhalb des Drehkranzes eine Durchführungsöffnung (10) vorgesehen ist, durch welche sich ein Vakuumschlauch (12) erstreckt.

2. Vorderwagen nach Anspruch 1,
**dadurch gekennzeichnet,**
**dass** die Durchführungsöffnung (10) einen Durchmesser von wenigstens 240 mm aufweist.

3. Vorderwagen nach einem der vorhergehenden Ansprüche,
**dadurch gekennzeichnet,**
**dass** eine Vakuumpumpe (11) vorgesehen ist, die einerseits einen Anschluss für eine Zapfwelle eines Zugfahrzeugs aufweist,
und die andererseits an einen Vakuumschlauch (12) angeschlossen ist.

4. Vorderwagen nach einem der vorhergehenden Ansprüche,
**dadurch gekennzeichnet,**
**dass** die Kippachse (8) tiefer als die Oberkante des Rahmens (2) angeordnet ist.

5. Vorderwagen nach einem der vorhergehenden Ansprüche,
**dadurch gekennzeichnet,**
**dass** der Rahmen (2) zwei nebeneinander verlaufende Längsträger (3) aufweist,
und die Halbwellen (9) der Kippachse (8) jeweils an einem Längsträger (3) gelagert sind.

6. Vorderwagen nach einem der vorhergehenden Ansprüche,
**dadurch gekennzeichnet,**
**dass** die Aufnahme (7) zwei Lagerböcke (14) aufweist, wobei jeder Lagerbock (14) zwei Öffnungen zur Führung einer Halbwelle (9) der Kippachse (8) aufweist.

## Claims

1. Front carriage (1) of a slewing ring trailer, having a frame (2), a running axle (5) that is connected to the frame (2) and supports running wheels (6) on the front carriage (1), a drawbar (4) that is rigidly connected to the frame (2) and a mounting means (7) configured as a slewing ring for attaching a second trailer part to the front carriage (1),
wherein this mounting means (7) is supported on the frame (2) of the front carriage (1),
is disposed in front of the running axle (5)
and is tiltably mounted on a tilting axle (8) extending at right angles to the direction of travel, **characterised in that** two half-shafts (9) that are aligned with each other form the tilting axle (8) and **in that** a lead-through opening (10) is disposed inside the slewing ring through which lead-through opening (10) a vacuum hose (12) extends.

2. Front carriage in accordance with claim 1, **characterised in that** the lead-through opening (10) has a diameter of at least 240 mm.

3. Front carriage in accordance with any one of the foregoing claims, **characterised in that** a vacuum pump (11) is provided for that, on the one hand, incorporates a connection for a power take-off shaft of a towing vehicle and, on the other, is connected to a vacuum hose (12).

4. Front carriage in accordance with any one of the foregoing claims, **characterised in that** the tilting axle (8) is disposed lower down than the upper edge of the frame (2).

5. Front carriage in accordance with any one of the foregoing claims, **characterised in that** the frame (2) incorporates two longitudinal bearing members (3) extending adjacently to each other and **in that** each of the half-shafts (9) on the tilting axle (8) is mounted on a longitudinal bearing member (3).

6. Front carriage in accordance with any one of the foregoing claims, **characterised in that** the mounting means (7) incorporates two bearing blocks (14), each bearing block (14) incorporating two openings to guide one half-shaft (9) of the tilting axle (8).

## Revendications

1. Véhicule avant (1) d'une remorque à couronne d'orientation, comprenant un châssis (2), un essieu de roulement (5) relié au châssis (2) et portant les roues (6) du véhicule avant (1), un timon (4) relié de manière rigide au châssis (2), un réceptacle (7) configuré en couronne d'orientation et servant à raccorder une seconde partie de remorque au véhicule avant (1), sachant que ce réceptacle (7) s'appuie contre le châssis (2) du véhicule avant (1) et qu'il est disposé devant l'essieu de roulement (5),
et qu'il se trouve en appui mobile basculant autour d'un axe de basculement (8) horizontal disposé transversalement au sens de déplacement,
**caractérisé en ce que** deux demi-arbres (9) en alignement réciproque forment l'axe de basculement (8) et qu'à l'intérieur de la couronne d'orientation est prévue un orifice de passage (10) à travers lequel s'étend un flexible sous vide (12).

2. Véhicule avant selon la revendication 1, **caractérisé en ce que** l'orifice de passage (10) présente un diamètre d'au moins 240 mm.

3. Véhicule avant selon l'une des revendications précédentes, **caractérisé en ce qu'**est prévue une pompe à vide (11) qui d'une part présente un raccord pour un arbre de prise de force d'un véhicule tracteur et qui d'autre part est reliée à un flexible sous vide (12).

4. Véhicule avant selon l'une des revendications précédentes, **caractérisé en ce que** l'axe de basculement (8) est disposé plus bas que le bord supérieur du châssis (2).

5. Véhicule avant selon l'une des revendications précédentes, **caractérisé en ce que** le châssis (2) comporte deux poutrelles longitudinales (3) disposées côte-à-côte, et que les demi-arbres (9) de l'axe de basculement (8) sont chacun en appui contre une poutrelle longitudinale (3).

6. Véhicule avant selon l'une des revendications précédentes, **caractérisé en ce que** le réceptacle (7) présente deux paliers supports (14), sachant que chaque palier support (14) présente deux orifices pour guider un demi-arbre (9) de l'axe de basculement (8).
